# EUROPÄISCHE PATENTANMELDUNG

(11) **EP 1 345 460 A1**
(43) Veröffentlichungstag der Anmeldung: **17.09.2003**
(21) Anmeldenummer: 02006022.4
(22) Anmeldetag: 15.03.2002
(51) Int. Cl.: H04Q 7/24, H04L 29/06

(54) **Informationsübertragung in einem Funkkommunikationssystem auf Internetprotokollbasis**

(71) Anmelder: SIEMENS AKTIENGESELLSCHAFT, 80333 München (DE)
(72) Erfinder: Mitjana, Enric, 81369 München (DE); Riegel, Maximilian, 90409 Nürnberg (DE)

(57) **Zusammenfassung**

Die Erfindung betrifft ein Verfahren zur Übertragung von Informationen in einem Kommunikationssystem mit mindestens zwei kommunizierenden Einrichtungen, wobei zur Informationsübertragung eine Verbindung zwischen den mindestens zwei kommunizierenden Einrichtungen zumindest über eine Funkkommunikations-Schnittstelle eines Funkkommunikationssystems mit einer Mehrzahl von über ein Basisstationsnetzwerk miteinander vernetzten Basisstationen erfolgt und wobei die Verbindung anhand von in hierarchische Protokollschichten gegliederten Kanälen durchgeführt wird. Erfindungsgemäß werden zumindest aus einem Kanal für die Funkverbindung zwischen einer kommunizierenden Einrichtung und mindestens einer Basisstation kanalspezifische Informationen an einen hierarchisch höheren Kanal gegeben, welcher ein Internetprotokoll-basierter Kanal für die Gesamtverbindung zwischen den mindestens zwei kommunizierenden Einrichtungen ist.

## Beschreibung

Informationsübertragung in einem Funkkommunikationssystem auf Internetprotokollbasis

Die Erfindung betrifft ein Verfahren zur Übertragung von Informationen in einem Kommunikationssystem mit mindestens zwei kommunizierenden Einrichtungen nach dem Oberbegriff des Anspruchs 1.

Die Erfindung betrifft ferner ein Kommunikationssystem nach dem Oberbegriff des Anspruchs 10.

Kommunikationssysteme gewinnen zunehmend an Bedeutung im wirtschaftlichen, aber auch im privaten Bereich. Es sind starke Bestrebungen vorhanden, kabelgebundene Kommunikationssysteme mit Funkkommunikationssystemen zu verknüpfen. Die entstehenden hybriden Kommunikationssysteme führen zu einer Erhöhung der Zahl der zur Verfügung stehenden Dienste, ermöglichen aber auch eine größere Flexibilität auf Seiten der Kommunikation. So werden Geräte entwickelt, die unterschiedliche Systeme nutzen können (Multi Homing).

Den Funkkommunikationssystemen kommt dabei aufgrund der ermöglichten Mobilität der Teilnehmer eine große Bedeutung zu.

In Funkkommunikationssystemen werden Informationen (beispielsweise Sprache, Bildinformation, Videoinformation, SMS [Short Message Service] oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen.

Für das eingeführte GSM-Mobilfunksystem (Global System for Mobile Communication) werden Frequenzen bei 900, 1800 und 1900 MHz genutzt. Diese Systeme übermitteln im wesentlichen Sprache, Telefax und Kurzmitteilungen SMS (Short Message Service) als auch digitale Daten.

Für zukünftige Mobilfunksysteme mit CDMA- oder TD/CDMA-Übertragungsverfahren, wie beispielsweise UMTS (Universal Mobile Telecommunication System) oder andere Systeme der dritten Generation, sind Frequenzen im Frequenzband von ca. 2000 MHz vorgesehen. Diese Systeme der dritten Generation werden entwickelt mit den Zielen weltweiter Funkabdeckung, einem großen Angebot an Diensten zur Datenübertragung und vor allem eine flexible Verwaltung der Kapazität der Funkschnittstelle, die bei Funk-Kommunikationssystemen die Schnittstelle mit den geringsten Ressourcen ist. Bei diesen Funk-Kommunikationssystemen soll es vor allem durch die flexible Verwaltung der Funkschnittstelle möglich sein, dass einer Teilnehmerstation bei Bedarf eine große Datenmenge mit hoher Datengeschwindigkeit senden und/oder empfangen kann.

Der Zugriff von Stationen auf die gemeinsamen Funkressourcen des Übertragungsmedium, wie zum Beispiel Zeit, Frequenz, Leistung oder Raum, wird bei diesen Funk-Kommunikationssystemen durch Vielfachzugriffsverfahren (Multiple Access, MA) geregelt.

Bei Zeitbereichs-Vielfachzugriffsverfahren (TDMA) wird jedes Sende- und Empfangsfrequenzband in Zeitschlitze unterteilt, wobei ein oder mehrere zyklisch wiederholte Zeitschlitze den Stationen zugeteilt werden. Durch TDMA wird die Funkressource Zeit stationsspezifisch separiert.

Bei Frequenzbereichs-Vielfachzugriffsverfahren (FDMA) wird der gesamte Frequenzbereich in schmalbandige Bereiche unterteilt, wobei ein oder mehrere schmalbandige Frequenzbänder den Stationen zugeteilt werden. Durch FDMA wird die Funkressource Frequenz stationsspezifisch separiert.

Bei Codebereichs-Vielfachzugriffsverfahren (CDMA) wird durch einen Spreizcode, der aus vielen einzelnen sogenannten Chips besteht, die zu übertragende Leistung/Information stationsspezifisch codiert, wodurch die zu übertragende Leistung codebedingt zufällig über einen großen Frequenzbereich gespreizt wird. Die von unterschiedlichen Stationen benutzen Spreizcodes innerhalb einer Zelle/Basisstation sind jeweils gegenseitig orthogonal oder im wesentlichen orthogonal, wodurch ein Empfänger die ihm zugedachte Signalleistung erkennt und andere Signale unterdrückt. Durch CDMA wird die Funkressource Leistung durch Spreizcodes stationsspezifisch separiert.

Bei orthogonalen Frequenz-Vielfachzugriffsverfahren (OFDM) werden die Daten breitbandig übermittelt, wobei das Frequenzband in äquidistante, orthogonale Unterträger eingeteilt wird, so dass die simultane Phasenverschiebung der Unterträger einen zwei-dimensionalen Datenfluss im Zeit-Frequenz Bereich aufspannt. Durch OFDM wird die Funkressource Frequenz mittels orthogonalen Unterträgern stationsspezifisch separiert. Die während einer Zeiteinheit auf den orthogonalen Unterträgern übermittelten zusammengefassten Datensymbole werden als OFDM Symbole bezeichnet.

Die Vielfachzugriffsverfahren können kombiniert werden. So benutzen viele Funkkommunikationssysteme eine Kombination der TDMA und FDMA Verfahren, wobei jedes schmalbandige Frequenzband in Zeitschlitze unterteilt ist.

Für das erwähnte UMTS-Mobilfunksystem wird zwischen einem sogenannten FDD-Modus (Frequency Division Duplex) und einem TDD-Modus (Time Division Duplex) unterschieden. Der TDD-Modus zeichnet sich insbesondere dadurch aus, dass ein gemeinsames Frequenzband sowohl für die Signalübertragung in Aufwärtsrichtung (UL - Uplink) als auch in Abwärtsrichtung (DL-Downlink) genutzt wird, während der FDD-Modus für die beiden Übertragungsrichtungen jeweils ein unterschiedliches Frequenzband nutzt.

In Funkkommunikationsverbindungen der zweiten und/oder dritten Generation können Informationen kanalvermittelt (CS Circuit Switched) oder paketvermittelt (PS Packet Switched) übertragen werden.

Die Verbindung zwischen den mindestens zwei kommunizierenden Einrichtungen zur Informationsübertragung erfolgt zumindest über eine Funkkommunikations-Schnittstelle eines Funkkommunikationssystems mit einer Mehrzahl von über ein Basisstationsnetzwerk miteinander vernetzten Basisstationen. Dabei wird die Verbindung anhand von in hierarchische Protokollschichten gegliederten Kanälen durchgeführt. Diese Schichten sind beispielsweise im ISO/OSI-Referenzmodell beschrieben, welches für eine weitgehende Standardisierung von Kommunikationssystemen geschaffen wurde.

In der Regel steht auf der einen Seite der Funkschnittstelle ein mobiles Endgerät als kommunizierende Einrichtung und auf der anderen Seite eine über das Basisstationsnetzwerk an ein Kernnetz (Core Net) angebundene Basisstation. Diese besitzen eine einheitliche Funktion, können aber je nach technischem System unterschiedliche Bezeichnungen aufweisen wie BTS (Base Transceiver Station) im GSM-System, Node B im UMTS-System oder AP (Access Point) im HIPERLAN/2-System.

Moderne mobile Kommunikationssysteme wie beispielsweise GPRS (General Packet Radio Service) oder UMTS basieren auf proprietären Protokollen, um eine hohe Mobilität zur Verfügung stellen zu können. Dies führt insbesondere in hybriden Kommunikationssystemen, welche aus an sich eigenständig funktionstüchtigen Kommunikationssystemen zusammengesetzt sind, zu Nachteilen. Die proprietären Funkkommunikations-Protokolle sind nicht IP-transparent (Internet Protocol). Wegen der verschiedenartigen Protokolle ist daher eine auf Internetprotokoll basierende End-zu-End-Verbindung nicht möglich.

Auch bei Verwendung eines Internetprotokoll-basierten Kanals für die Gesamtverbindung zwischen zwei kommunizierenden Einrichtungen eines Kommunikationssystems, welche über eine Funkkommunikations-Schnittstelle miteinander kommunizieren, bestehen Nachteile aufgrund der Protokollstrukturen.

So wird möglicherweise eine Funkverbindung über die Funk-Schnittstelle von einer Basisstation zu einem mobilen Endgerät in einem bestimmten Funkkanal (z.B. Frequenz) gehalten, obwohl in einem anderen verfügbaren Funkkanal (z.B. mit anderer Frequenz) eine bessere Qualität der Funkverbindung gewährleistet werden könnte. Hinzu kommt die Problematik der möglicherweise großen zeitlichen Invarianz der Funkverbindung.

Der vorliegenden Erfindung liegt daher die Aufgabe zugrunde, ein Verfahren und ein Kommunikationssystem der eingangs genannten Art aufzuzeigen, durch welche die Kommunikation verbessert werden kann. Hierbei sollte möglichst die Qualität der Funkverbindung Berücksichtigung finden.

Diese Aufgabe wird erfindungsgemäß für das Verfahren durch den im Anspruch 1 beschriebenen Gegenstand gelöst.

Vorteilhafte Ausgestaltungen und Weiterbildungen sind Gegenstand der Unteransprüche.

Erfindungsgemäß werden zumindest aus einem Kanal für die Funkverbindung zwischen einer kommunizierenden Einrichtung und mindestens einer Basisstation kanalspezifische Informationen an einen hierarchischen höheren Kanal gegeben, welcher ein Internetprotokoll-basierter Kanal für die Gesamtverbindung zwischen den mindestens zwei kommunizierenden Einrichtungen ist.

Die kanalspezifischen Informationen umfassen dabei im Rahmen der vorliegenden Erfindung insbesondere schichtspezifische Informationen, welche beispielsweise nach dem ISO/OSI-Modell nicht zur Weitergabe und/oder Verarbeitung an höhere Schichten vorgesehen sind, sondern nur zur Information in derselben und/oder gegebenenfalls tieferen Schichten dienen. Die Erfindung bedeutet daher einen gewissen Bruch mit der strengen Systemarchitektur der Protokollschichten. Die an hierarchisch höhere Kanäle bzw. Schichten weiterzugebenden Informationen betreffen hierbei in erster Linie Informationen der Schicht 1 und/oder Schicht 2 nach ISO/OSI-Modell. Der oder die hierarchisch höheren Kanäle, an die erfindungsgemäß die Informationen aus hierarchisch untergeordneten Kanälen übermittelt werden, betreffen insbesondere die Schicht 4 oder höhere Schichten nach ISO/OSI-Modell.

Dadurch, dass die kanalspezifischen Informationen an einen oder mehrere hierarchisch höhere Kanäle abgegeben werden, kann in der hierarchisch höher gelegenen Schicht proaktiv gehandelt werden, so dass sich insgesamt eine schnelle und wirkungsvolle Möglichkeit für das Kommunikationssystem ergibt, die beste Verbindung zu halten bzw. aufzubauen, wenn beispielsweise Anzeichen für eine Einbuße an Qualität hinsichtlich der Funkverbindung vorliegen.

In Ausgestaltung der Erfindung werden aus einer bitübertragungskanalspezifischen Information über die physikalische Funkverbindung zwischen einer kommunizierenden Einrichtung und mindestens einer Basisstation und an hierarchisch höheren, Internetprotokoll-basierten Kanal gegeben. Dies bedeutet, dass Schicht 1-Informationen an höhere Schichten übertragen werden.

Eine zusätzliche oder alternative Möglichkeit besteht darin, dass aus einem Sicherungsschichtkanal für die Sicherung der Funkverbindung zwischen einer kommunizierenden Einrichtung und mindestens einer Basisstation kanalspezifische Informationen an den hierarchisch höheren, Internetprotokoll-basierten Kanal gegeben werden. Bei dieser Maßnahme werden Schicht 2-Informationen an höhere Schichten übertragen. Dabei kann die Sicherungsschicht beispielsweise in die Unterschichten Medium Access Control (MAC), Radio Link Control (RLC), Packet Data Convergence Protocol (PDCP) und Broadcast/Multicast Control (BMC) zerfallen.

Die an hierarchisch höhere Kanäle gegebene Informationen können grundsätzlich alle geeigneten Informationen umfassen und beinhalten. Insbesondere können Parameterinformationen bezüglich der Funkverbindung zwischen kommunizierender Einrichtung und Basisstation an höhere Schichten übermittelt werden. Insbesondere können Informationen zur Dienstgüte (QoS Quality of Service) der Funkverbindung betroffen sein. Die Parameterinformationen können dabei insbesondere Messergebnisse - beispielsweise aus Messungen der Funkkanalqualität - enthalten.

Die Informationen können aber auch Berechnungen aus Informationen bezüglich der Funkverbindung zwischen kommunizierender Einrichtung und Basisstation betreffen. Hierbei sind insbesondere Berechnungen, die auf der Schicht 1 und/oder für die Schicht 1 erfolgen, angesprochen.

Vorteilhafterweise kann die Information Kontrollinformationen bezüglich der Funkverbindung zwischen kommunizierender Einrichtung und Basisstation betreffen. Insbesondere können dabei Informationen aus der RLC-Schicht übermittelt werden.

In Weiterbildung der Erfindung wird ein Internetprotokoll-basierter Kanal für die Verbindung zwischen den mindestens zwei kommunizierenden Einrichtungen gemäß dem SCTP-Protokoll verwendet. Dieses SCTP (Stream Control Transmission Protocol) betrifft eine in jüngerer Zeit entwickelte Technologie zum Transport von Signalisierungsmeldungen über IP-basierte kabelgebundene Netze. Eine Nutzung im Zusammenhang mit Funkkommunikationsnetzen war bislang nicht vorgesehen. Überraschenderweise hat sich nun aber gezeigt, dass sich dieses Protokoll für Funkkommunikationsnetze vorteilhaft einsetzen lässt.

Im Unterschied zu anderen Internetprotokollkommunikationen wie beispielsweise TCP/IP ermöglicht SCTP, zusätzlich zu dem in der physikalischen Verbindung aktiven Paar von IP-Adressen ein oder mehrere weitere IP-Adressen-Paare vorzuhalten, über welche andere physikalische Verbindungen sofort aktiviert werden könnten. Im Falle einer Störung oder einer Unterbrechung der Kommunikation ist daher ein wesentlich schnellerer Wechsel auf eine alternative physikalische Verbindung durchführbar.

So können beispielsweise in einem mobilen Endgerät, welches beispielsweise über die Funkschnittstelle und das an diese angeschlossene Kernnetz mit einem Internet-Server verbunden ist, einige IP-Adressen allokiert sein, über welche im Bedarfsfall eine Verbindung hergestellt werden kann.

Im Rahmen der Erfindung können verschiedene Zugangsnetzwerke mit einer Funkkommunikations-Schnittstelle eingesetzt werden. Dabei können die verschiedenen Funkkommunikationssysteme additiv oder alternativ zum Einsatz kommen. Die verschiedenen Zugangsnetzwerke können beispielsweise ein UMTS-System, ein GSM-System und/oder ein WLAN-System (Wireless LAN - Local A-rea Network) betreffen. Insbesondere kann das WLAN-System nach dem HIPERLAN/2-Standard, nach dem IEEE 802.11a-Standard oder nach dem HiSWAN-A-Standard spezifiziert sein.

In Weiterbildung der Erfindung wird aufgrund der an hierarchisch höhere Informationen ein Wechsel hinsichtlich mindestens eines Vielfachzugriffsmediums und/oder ein Handover initiiert. So kann aufgrund der übermittelten Informationen beispielsweise ein Wechsel der Frequenz, des Zeitschlitzes und/oder des verwendeten Codes erfolgen. Für den Fall des Handovers können alle bekannten Arten von Handover initiiert werden, beispielsweise die als sogenannte Hard (break-beforemake) oder Soft (make-before-break) Handover bekannten Varianten.

Beim erfindungsgemäßen Kommunikationssystem zur Durchführung des beschriebenen Verfahrens sind Mittel zur Übertragung von kanalspezifischen Informationen für die Funkverbindung zwischen einer kommunizierenden Einrichtung und mindestens einer Basisstation von einem Kanal an einen hierarchisch höheren Kanal, welcher ein Internetprotokoll-basierter Kanal für die Gesamtverbindung zwischen den mindestens zwei kommunizierenden Einrichtungen ist, vorgesehen.

Ferner können im Kommunikationssystem weitere Mittel zur Durchführung der entsprechend abgewandelten, oben ausgeführten Verfahren vorhanden sein.

Im Folgenden werden die Vorteile der Erfindung anhand dreier Beispiele näher erläutert:

Aufgrund der Erfindung kann sichergestellt werden, dass immer die beste Funkverbindung besteht. So ist es beispielsweise in einem Szenario, wo ein mobiles Endgerät in Sichtkontakt mit mehreren Basisstationen steht, möglich, zwischen verschiedenen Verbindungen zu wechseln, und zwar unter Berücksichtigung der Qualität der einzelnen Verbindungen. Beispielsweise kann in einem Konferenzraum mit Abdeckung durch zwei Basisstationen ein Laptop die Verbindung von einer Basisstation zur anderen umschalten, wenn beispielsweise eine Person zwischen Laptop und der zunächst aktiven Basisstation steht und so die zunächst Verbindung (line of sight) unterbrochen oder beeinträchtigt worden ist.

Ein ähnlicher Wechsel kann für Handover zwischen verschiedenen Basisstationen desselben technischen Funkkommunikationssystems erfolgen. Wenn beispielsweise eine Funkverbindung schlechter wird, kann die Mobilstation einen IP-Adresswechsel initiieren, bevor die Verbindung vollständig zusammenbricht.

Auch ein Handover zwischen Basisstationen, welche zu verschiedenen Funkkommunikationssystemen gehören, ist möglich. Beispielsweise kann eine Basisstation zum UMTS-Netzwerk gehören und eine andere Basisstation Teil eines WLAN-Netzes sein. Ein Wechsel kann hier initiiert werden beispielsweise wegen der Qualität der Verbindung, wegen netzspezifischer Eigenschaften der unterschiedlichen Netzwerkverbindungen wie zum Beispiel unterschiedliche Kosten und/oder wegen netzwerkindividueller Verfügbarkeiten von speziellen Diensten.

Die Erfindung führt zu einer Steigerung der Performance bei gleichzeitiger Reduktion des Signalisierungsaufwands und damit auch zu einer Verringerung der Interferenz.

Grundsätzlich kann im Zusammenhang mit der erfindungsgemäßen Übermittlung der kanalspezifischen Informationen an hierarchisch höhere Kanäle auf Erkenntnisse zurückgegriffen werden, die im Zusammenhang mit den öffentlich geförderten Projekten BRAIN und MIND gewonnen worden sind. Dies trifft insbesondere auf die sogenannte IP₂W Schnittstelle (IP to Wireless Interface) zu.

## Patentansprüche

1. Verfahren zur Übertragung von Informationen in einem Kommunikationssystem mit mindestens zwei kommunizierenden Einrichtungen,
wobei zur Informationsübertragung eine Verbindung zwischen den mindestens zwei kommunizierenden Einrichtungen zumindest über eine Funkkommunikations-Schnittstelle eines Funkkommunikationssystems mit einer Mehrzahl von über ein Basisstationsnetzwerk miteinander vernetzten Basisstationen erfolgt,
wobei die Verbindung anhand von in hierarchische Protokollschichten gegliederten Kanälen durchgeführt wird,
**dadurch gekennzeichnet,**
**dass** zumindest aus einem Kanal für die Funkverbindung zwischen einer kommunizierenden Einrichtung und mindestens einer Basisstation kanalspezifische Informationen an einen hierarchisch höheren Kanal gegeben werden, welcher ein Internetprotokoll-basierter Kanal für die Gesamtverbindung zwischen den mindestens zwei kommunizierenden Einrichtungen ist.

2. Verfahren nach Anspruch 1, **dadurch gekennzeichnet, dass** aus einem Bitübertragungskanal spezifische Informationen über die physikalische Funkverbindung zwischen einer kommunizierenden Einrichtung und mindestens einer Basisstation an den hierarchisch höheren, Internetprotokoll-basierten Kanal gegeben werden.

3. Verfahren nach Anspruch 1 oder 2, **dadurch gekennzeichnet, dass** aus einem Sicherungsschichtkanal für die Sicherung der Funkverbindung zwischen einer kommunizierenden Einrichtung und mindestens einer Basisstation kanalspezifische Informationen an den hierarchisch höheren, Internetprotokoll-basierten Kanal gegeben werden.

4. Verfahren nach einem der Ansprüche 2 oder 3, **dadurch gekennzeichnet, dass** die Informationen Parameterinformationen bezüglich der Funkverbindung zwischen kommunizierender Einrichtung und Basisstation betreffen.

5. Verfahren nach einem der Ansprüche 2 bis 4, **dadurch gekennzeichnet, dass** die Informationen Berechnungen aus Informationen bezüglich der Funkverbindung zwischen kommunizierender Einrichtung und Basisstation betreffen.

6. Verfahren nach einem der Ansprüche 3 bis 5, **dadurch gekennzeichnet, dass** die Informationen Kontrollinformationen bezüglich der Funkverbindung zwischen kommunizierender Einrichtung und Basisstation betreffen.

7. Verfahren nach einem der Ansprüche 1 bis 6, **dadurch gekennzeichnet, dass** ein Internetprotokoll-basierter Kanal für die Verbindung zwischen den mindestens zwei kommunizierenden Einrichtungen gemäß dem SCTP-Protokoll verwendet wird.

8. Verfahren nach einem der Ansprüche 1 bis 7, **dadurch gekennzeichnet, dass** verschiedene Zugangsnetzwerke mit einer Funkkommunikations-Schnittstelle eingesetzt werden.

9. Verfahren nach einem der Ansprüche 1 bis 8, **dadurch gekennzeichnet, dass** aufgrund der Informationen ein Wechsel hinsichtlich mindestens eines Vielfachzugriffsmediums und/oder ein Handover initiiert wird.

10. Kommunikationssystem zur Durchführung des Verfahrens nach einem der Ansprüche 1 bis 9 umfassend mindestens zwei kommunizierenden Einrichtungen und zumindest eine Mehrzahl von über ein Basisstationsnetzwerk miteinander vernetzten Basisstationen,
**dadurch gekennzeichnet,**
**dass** Mittel zur Übertragung von kanalspezifische Informationen für die Funkverbindung zwischen einer kommunizierenden Einrichtung und mindestens einer Basisstation von einem Kanal an einen hierarchisch höheren Kanal, welcher ein Internetprotokoll-basierter Kanal für die Gesamtverbindung zwischen den mindestens zwei kommunizierenden Einrichtungen ist, vorgesehen sind.
